# EUROPÄISCHE PATENTSCHRIFT

(11) **EP 2 694 245 B1**
(45) Veröffentlichungstag und Bekanntmachung des Hinweises auf die Patenterteilung: **20.05.2015**
(21) Anmeldenummer: 12703246.4
(22) Anmeldetag: 04.02.2012
(51) Int. Cl.: B23Q 7/00, B65G 25/02

(54) **TRANSPORTVORRICHTUNG FÜR EINE LÄNGSACHSE AUFWEISENDE WERKSTÜCKE**
TRANSPORT DEVICE FOR WORKPIECES WHICH HAVE A LONGITUDINAL AXIS
DISPOSITIF DE TRANSPORT POUR PIÈCES POSSÉDANT UN AXE LONGITUDINAL

(30) Priorität: 06.04.2011 DE 102011016199
(43) Veröffentlichungstag der Anmeldung: 12.02.2014
(73) Patentinhaber: SMS Meer GmbH, 41069 Mönchengladbach (DE)
(72) Erfinder: ESSER, Karl-Josef, 41179 Mönchengladbach (DE)
(74) Vertreter: Grosse, Wolf-Dietrich Rüdiger
(86) Internationale Anmeldenummer: PCT/EP2012/000504
(87) Internationale Veröffentlichungsnummer: WO 2012/136289

(56) Entgegenhaltungen:
- EP-A2- 1 559 494
- FR-A1- 2 489 276

## Beschreibung

Die Erfindung betrifft eine Transportvorrichtung für eine Längsachse aufweisende Werkstücke, insbesondere für Rohre oder für Rundmaterial, mit der die Werkstücke in eine Förderrichtung quer zu ihrer Längsachse von einem ersten Ort zu einem zweiten Ort gefördert werden können, wobei die Transportvorrichtung aufweist: mindestens zwei in Förderrichtung beabstandet angeordnete ortsfeste Ablageträger für die Zwischenlagerung der zu fördernden Werkstücke, mindestens einen ersten Förderrechen mit einer Anzahl in Förderrichtung beabstandeter Auflageflächen für die Werkstücke, mindestens zwei parallel zueinander angeordnete und synchron angetriebene Antriebswellen und mindestens zwei erste Schwingen, wobei jede erste Schwinge drehfest mit einer Antriebswelle und gelenkig mit dem ersten Förderrechen verbunden ist. FR-2489276 offenbart eine solche Transportvorrichtung.

Mit einer solchen Vorrichtung ist der ladgeweise Quertransport von Werkstücken möglich, von denen mehrere in Richtung ihrer Längsachsen im Abstand parallel nebeneinander liegend angeordnet sind. Der Transport erfolgt durch wechselweises Anheben und Absenken nach Art eines Hubbalkenförderers schrittweise gleichzeitig durch eine Anlage zur Bearbeitung der Enden der Werkstücke, die mit Fasen und/oder einem Gewinde versehen werden.

Die Werkstücke werden dabei üblich beispielsweise an bzw. in einer Rohrfräsmaschine zunächst mit einer Fase versehen und dann zu einer ersten Gewindeschneidmaschine bzw. einer mit Werkzeugen zum Fräsen der stirnseitigen Enden der Werkstücke bestückten Maschine transportiert; die genannten Maschinen sind hierbei an voneinander beabstandeten Ablagestellen angeordnet. Die Werkstücke müssen während des Transports abgelegt bzw. zwischenpositioniert werden, wobei die Ablage bzw. Zwischenpositionierung auf in horizontaler Transportrichtung voneinander beabstandeten Ablagestellen erfolgt, die in verschiedenen Höhenebenen, nämlich vertikal einer unteren und einer oberen Ebene, angeordnet sein können.

Eine Werkzeugmaschine zur Bearbeitung eines rohr- oder stabförmigen Werkstücks besitzt üblicher Weise mindestens einen Revolverkopf, der mit mindestens zwei Werkzeugen bestückbar ist, wobei das rohrförmige Werkstück um eine Drehachse rotieren kann und der Revolverkopf zur Positionierung eines Werkzeugs um eine Revolverdrehachse drehbar ist.

Werkzeugmaschinen der genannten Art werden eingesetzt, um rohrförmige Werkstücke an ihrem Außen- und Innenumfang sowie an ihrer Stirnseite bearbeiten zu können, d. h. das Rohrende wird einer spanenden Bearbeitung unterzogen. Hierunter sind generell beliebige Andrehungen zu verstehen und insbesondere auch die Einbringung von Innen- und Außengewinden oder das Anfasen der Enden bzw. Kopfenden der Werkstücke. Hierfür sind Maschinen bekannt, bei denen das rohrförmige Werkstück in einer Werkstückspindel gespannt wird. Die Bearbeitung erfolgt dann durch Heranführen von Werkzeugen an das Werkstück, wobei mehrere Werkzeuge von einem Revolverkopf gehalten werden. Die Drehachsen der Werkstückspindel und des Revolverkopfs sind parallel, optional rechtwinklig zueinander angeordnet. Dabei ist es generell möglich, dass sich das Werkstück, d. h. das rohrförmige zu bearbeitende Bauteil, dreht und die Werkzeuge stillstehen; genauso können auch die Werkzeuge rotieren und das stillstehende Werkstück bearbeiten. In letzterem Falle dreht die Werkstückspindel das Werkstück lediglich so, dass es bei der spanenden Bearbeitung in der richtigen Position zu liegen kommt. Bekannt ist es auch, dass mit zwei Revolverköpfen gearbeitet wird, die dann eine entsprechende Zahl von Werkzeugen bereithalten. Zum diesbezüglichen Stand der Technik wird auf die DE 10 2004 004 498 A1 hingewiesen.

Die Zustellbewegungen zwischen dem rohrförmigen Werkstück und den Werkzeugen werden dabei in bekannter Weise numerisch gesteuert. Hierfür ist es erforderlich, dass im Falle eines während der spanenden Bearbeitung ruhenden rohrförmigen Werkstücks zunächst dieses in eine definierte Lage zur Maschine gebracht werden muss, bevor der Werkzeugvorschub aktiviert wird und die Bearbeitung des Rohrendes durch das jeweilige rotierende Werkzeug erfolgen kann. Analoges gilt, wenn das rohrförmige Werkstück rotiert und das stehende Werkzeug an das Rohr herangefahren wird.

Um solchen Werkzeugmaschinen die Werkstücke zuzuführen, sind Transportvorrichtungen der eingangs genannten Art bekannt, bei denen ein von einem Kurbeltrieb bewegter, balkenartiger Rechen mit seinen zinkenartigen Auflagen die Werkstücke takt- bzw. schrittweise zu den einzelnen Ablagestellen bzw. zur Bearbeitung in Flucht vor der/den Werkzeugmaschine(n) liegend transportiert. Der Rechen muss die Ablagestellen der unteren und der oberen Höhenebene anfahren, wobei die Drehwinkel zu den Werkzeugmaschinen größer sind als aus den Ablagestellen des Transportweges, d. h. von Ablagestelle zu Ablagestelle. Trotz einer maximal zulässigen Beschleunigung sind die Taktzeiten eines über synchron laufende Kurbeltriebe weiter getakteten Rechens aufgrund des großen Schwenkwinkels relativ hoch.

Der Erfindung liegt daher die Aufgabe zugrunde, eine Transportvorrichtung der eingangs genannten Art so fortzubilden, dass es möglich wird, unter Einhaltung vorgegebener maximal zulässiger Beschleunigungen für das zu transportierende Gut einen schnelleren Transport zu ermöglichen, so dass eine verkürzte Transportzeit und somit eine höhere Produktivität der Anlage erreicht wird. Des weiteren soll es möglich sein, die vorgeschlagene Transportvorrichtung in einfacher und damit kostengünstiger Weise herzustellen.

Die Lösung dieser Aufgabe durch die Erfindung ist dadurch gekennzeichnet, dass die Transportvorrichtung zusätzlich zu den eingangs genannten Elementen weiterhin mindestens einen zweiten Förderrechen mit mindestens einer Auflagefläche für die Werkstücke aufweist, wobei der zweite Förderrechen über zwei zweite Schwingen mit den Antriebswellen verbunden ist, wobei jede zweite Schwinge drehfest mit einer Antriebswelle und gelenkig mit dem zweiten Förderrechen verbunden ist und wobei die zweiten Schwingen auf der jeweiligen Antriebswelle relativ zu den ersten Schwingen in Umfangsrichtung um einen Versatzwinkel angeordnet sind. Von den solchermaßen geschaffenen Doppelrechen können in Richtung der Längsachse der Werkstücke bzw. Rohre oder Rundmaterialien abhängig von der Rohrlänge entsprechend mehrere Einheiten mit synchronem Antrieb der Wellen über Kupplungswellen vorgesehen werden.

Der Versatzwinkel beträgt bevorzugt zwischen 40° und 80°, wobei sich ein Wert von 60° besonders bewährt hat.

Die beiden Antriebswellen sind bevorzugt von einem gemeinsamen Antriebsmotor angetrieben. Die beiden Antriebswellen können vom Antriebsmotor im Bereich ihrer axialen Mitte angetrieben werden, wobei die ersten und zweiten Schwingen in den axialen Endbereichen der Antriebswellen drehfest angeordnet sind. Somit ergibt sich eine einfache und günstige Konstruktion.

Die Ablageträger können auf zwei unterschiedlichen Höhenniveaus angeordnet sein. Die Ablageträger sind dabei bevorzugt als prismenförmige Auflagen ausgebildet.

Die Anzahl der Auflageflächen für die Werkstücke des erste und des zweiten Förderrechens müssen keinesfalls gleich groß sein; es kann vorgesehen werden, dass die Anzahl der Auflageflächen des ersten Förderrechens größer ist als die Anzahl der Auflageflächen für die Werkstücke des zweiten Förderrechens.

Am ersten Ort und/oder am zweiten Ort kann eine Gewindeschneidmaschine zur Einbringung eines Gewindes in die Werkstücke oder eine Maschine zum Anfasen oder Anfräsen der Werkstücke angeordnet sein.

Am ersten Ort und/oder am zweiten Ort kann ferner eine Spannvorrichtung zum Spannen eines Werkstücks angeordnet sein; diese Spannvorrichtung kann auch Bestandteil einer Werkzeugmaschine sein.

Erfindungsgemäß lassen sich somit eine verkürzte Transport- bzw. Taktzeit mit außerdem kleineren und auch gleichen Transport-Drehwinkeln im Maschinenbereich sowie eine höhere Produktivität durch zwei horizontal voneinander beabstandete und in der Höhe versetzt zueinander angeordnete, gemeinsam angetriebene Förderrechen erreichen, wobei die Schwingen der beiden Rechen auf den Antriebswellen der Kurbeltriebe mit einem Winkelversatz (bevorzugt von 60°) gelagert sind.

Der somit geschaffene Doppel-Rechen mit an beiden Seiten der - gegenüber einem Einzelrechen etwas längeren - Antriebswelle jeweils einem Rechen fährt mit maximal zulässiger Beschleunigung beide vertikalen Höhenebenen aufgrund der mit einem Winkelversatz auf der Antriebswelle montierten Schwingen der Rechen gleichzeitig an. Die für jeden Rechen verringerten und gleichen Transport-Drehwinkel, beim ersten Rechen z. B. 240° und beim zweiten Rechen mit einem Winkelversatz der Schwingen von 60° entsprechend 180°, ermöglichen eine Reduzierung der Taktzeiten um mindestens 25%.

In der Zeichnung sind Ausführungsbeispiele der Erfindung dargestellt. Es zeigen:
- Fig. 1a: die Seitenansicht eines Doppel-Rechens,
- Fig. 1b: die Draufsicht und
- Fig. 1c: die Vorderansicht einer Transportvorrichtung zum Transportieren von Rohren in eine Förderrichtung;
- Fig. 2: die Seitenansicht einer solchen Transportvorrichtung gemäß einer etwas anderen Ausführungsform; und
- Fig. 3: die Seitenansicht einer solchen Transportvorrichtung gemäß einer weiteren etwas anderen Ausführungsform.

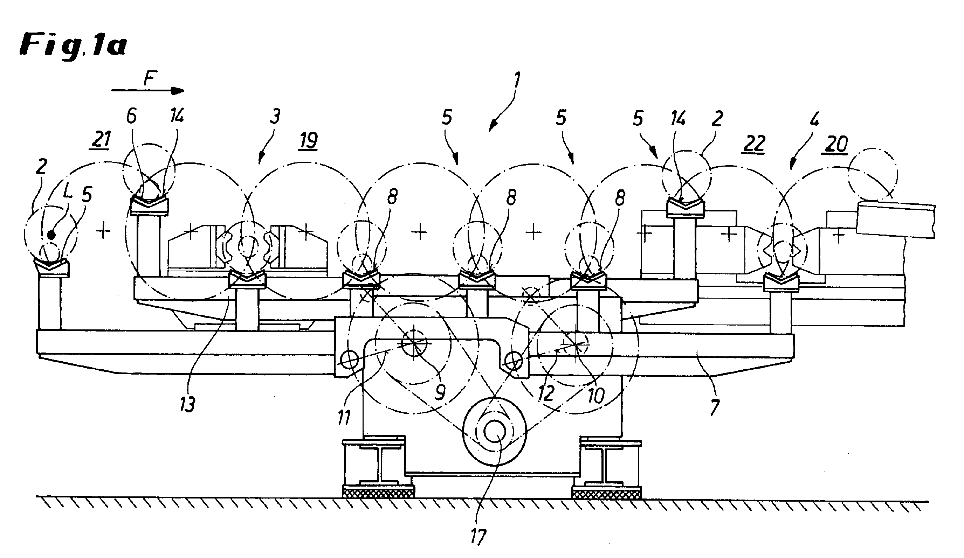

In Fig. 1a bis Fig. 1c ist eine Transportvorrichtung 1 zu sehen, mit der Werkstücke 2 in Form von Rohren in eine Förderrichtung F gefördert werden. Die Förderrichtung F steht dabei senkrecht auf der Längsachse L der Werkstücke 2.

Die Transportvorrichtung 1 arbeitet ähnlich einem Hubbalkenförderer. Hierfür weist die Transportvorrichtung 1 eine Anzahl ortsfest angeordnete Ablageträger 5 und 6 auf, auf denen jeweils ein Werkstück 2 während des Transports zeitweise abgelegt bzw. zwischenpositioniert wird. Es sei bemerkt, dass je eine Transportvorrichtung 1, wie sie in den Figuren dargestellt ist, zumindest in den axialen Endbereichen des zu fördernden rohrförmigen Guts angeordnet ist, wobei beide Transportvorrichtungen 1 synchron arbeiten.

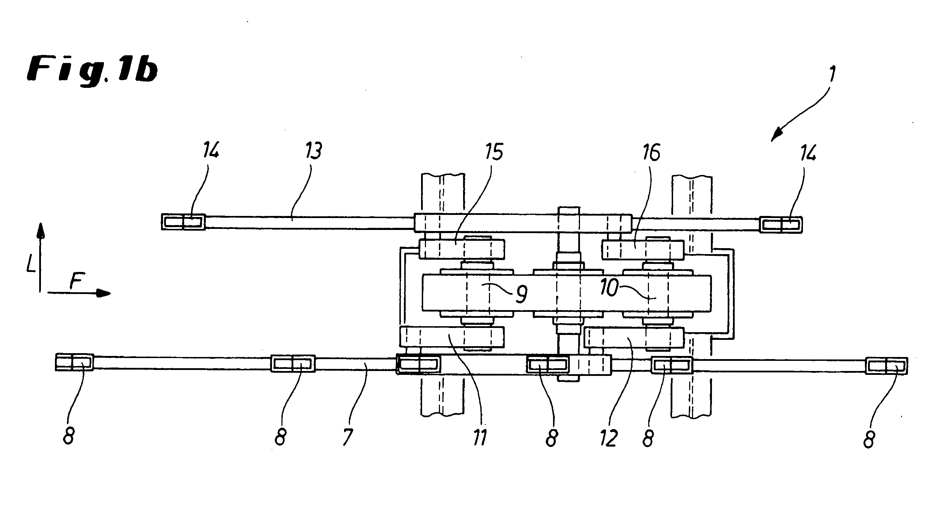

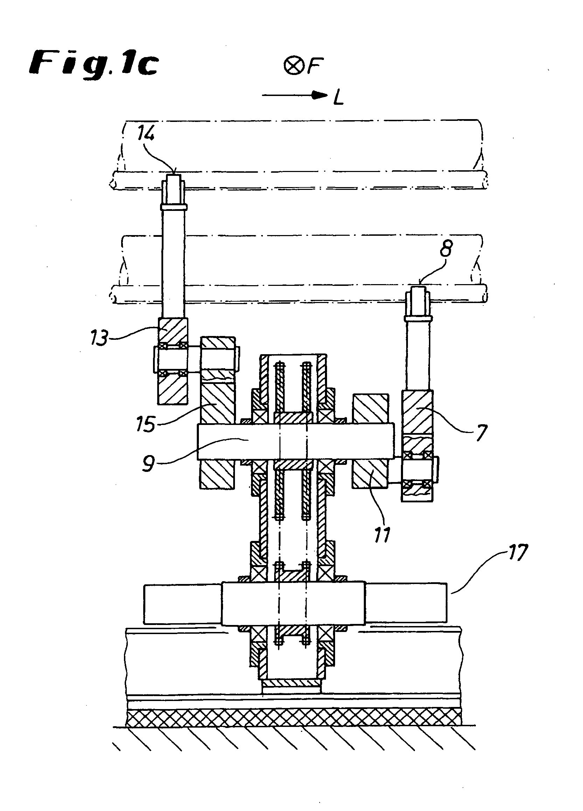

Das getaktete Weiterfördern von einem Ablageträger 5, 6 zum in Förderrichtung F folgenden Ablageträger erfolgt mittels zweier Förderrechen, nämlich mittels eines ersten Förderrechens 7 und eines zweiten Förderrechens 13. Hierzu ist ein Antriebsmotor 17 vorhanden, der über ein geeignetes Antriebselement (z. B. über eine Kette oder über einen Riemen) zwei Antriebswellen 9 und 10 synchron antreibt. An den Antriebswellen 9 und 10 sind je zwei Schwingen drehfest angeordnet, nämlich je eine erste Schwinge 11 bzw. 12 und eine zweite Schwinge 15 bzw. 16 (s. hierzu am besten Fig. 1 b). Die kurbelarmartigen Schwingen 11, 12, 15, 16 sind mit ihrem von der Antriebswelle 9, 10 entfernten Ende gelenkig an dem jeweiligen Förderrechen 7 bzw. 13 angebracht. Aus den Figuren 1b und 1 c lässt sich also insbesondere entnehmen, dass beide Rechen 7, 13 über ihre Schwingen 11, 12, 15, 16 auf gemeinsamen Antriebswellen 9, 10 gelagert bzw. montiert sind.

Demzufolge hat die synchrone Drehung der Antriebswellen 9, 10 mittels des Antriebsmotors 17 zur Folge, dass die Schwingen 11, 12, 15, 16 zusammen mit den Antriebswellen 9, 10 rotieren und die beiden Förderrechen 7 und 13 eine oszillierende kombinierte Hub- und Translationsbewegung ausüben.

An der Oberseite der Förderrechen 7 und 13 sind Auflageflächen 8 bzw. 14 angeordnet, die als zinkenartige Auflagen ausgebildet sind; die in der Seitenansicht V-förmige Ausgestaltung der Auflageflächen 8, 14 stellt sicher, dass ein rohrförmiges Werkstück 2 in der Auflage sicher gehalten werden kann. Ein Werkstück 2 kann so von einem ortsfesten Ablageträger 5, 6 durch die Förderrechen 7, 13 bzw. deren Auflageflächen 8, 14 nach oben abgehoben, entlang der Bewegungsbahn der Rechen 7, 13 weiterbewegt und dann - durch die Absenkbewegung der Rechen 7, 13 - auf dem nächsten Ablageträger 5, 6 wieder abgelegt und auf diese Weise in Förderrichtung F weitertransportiert werden.

In Fig. 1a ist eine Fräs- bzw. Fasmaschine 19 sowie eine Gewindeschneidmaschine 20 nur sehr schematisch angedeutet. Vor der Maschine 19 befindet sich ein Ausrichtpusher 21. Vor der Gewindeschneidmaschine 20 ist ein Ausrichtrollgang 22 angeordnet. Zwischen den Maschinen 19 und 20 sind mehrere stationäre Ablageträger (Ablageprismen) 5 vorgesehen.

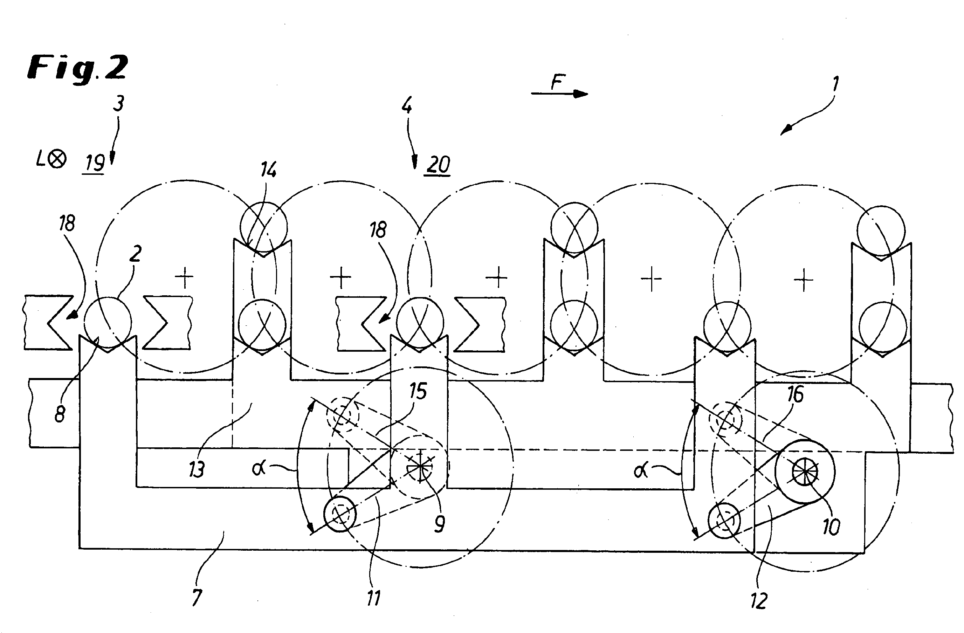

Wesentlich ist, dass die ersten Schwingen 11, 12 und die zweiten Schwingen 15, 16 - wie es am besten in Fig. 2 zu erkennen ist - in Umfangsrichtung um einen Versatzwinkel α an der jeweiligen Antriebswelle 9, 10 befestigt sind. Dieser Winkel beträgt im Ausführungsbeispiel 60°.

Demgemäß muss die Anordnung umfassend die beiden bewegten Förderrechen 7, 13 - also den Doppelrechen - nicht um eine volle Drehung der Antriebswellen 9, 10 bewegt werden, bevor die zinkenartigen Auflagen mit den Auflageflächen 8 bzw. 14 wieder in Eingriff mit einem Werkstück 2 kommen. Vielmehr fördert der um den Versatzwinkel α nachfolgende Förderrechen bereits nach Drehung der Antriebswellen 9, 10 um den genannten Winkel das Werkstück 2 in der erläuterten Weise weiter. Demgemäß ist ein schnellerer Transport der Werkstücke möglich, ohne die zulässigen Beschleunigungen für das Werkstück 2 überschreiten zu müssen.

Generell wird das Werkstück 2 von einem ersten Ort 3 zu einem zweiten Ort 4 gefördert (s. hierzu Fig. 1 a oder Fig. 2), wobei an den genannten beiden Orten Werkzeugmaschinen zur Bearbeitung der Werkstücke angeordnet sein können. In Fig. 2 ist hierzu jeweils eine Spannvorrichtung 18 angedeutet, mit der das Werkstück 2 zwecks Bearbeitung geklemmt werden kann.

In Fig. 1 a ist zu erkennen, dass trotz der in bzw. aus unterschiedlichen Höhenebenen abgelegten bzw. zu übernehmenden Werkstücke 2 diese von beiden Rechen 7, 13 gleichzeitig angefahren, übernommen sowie weitergetaktet und auch auf den unterschiedlichen Höhen wieder abgelegt werden.

Fig. 2 zeigt in einer vereinfachten Doppelrechen-Längsansicht den getakteten Transport eines Werkstücks 2 aus den geöffneten Spannmitteln der Spannvorrichtung 18 der Fas- bzw. Fräsmaschine (Rohrfasanlage) 19 mit Zwischenpositionierung auf einer höher gelegenen Ablage und dann Ablage in einer tiefer gelegenen Ebene zwischen die geöffneten Spannmittel der Gewindeschneidmaschine 20 und den dann folgenden getakteten Weitertransport des Werkstücks 2, z. B. zu einem nicht dargestellten Ablaufrollgang.

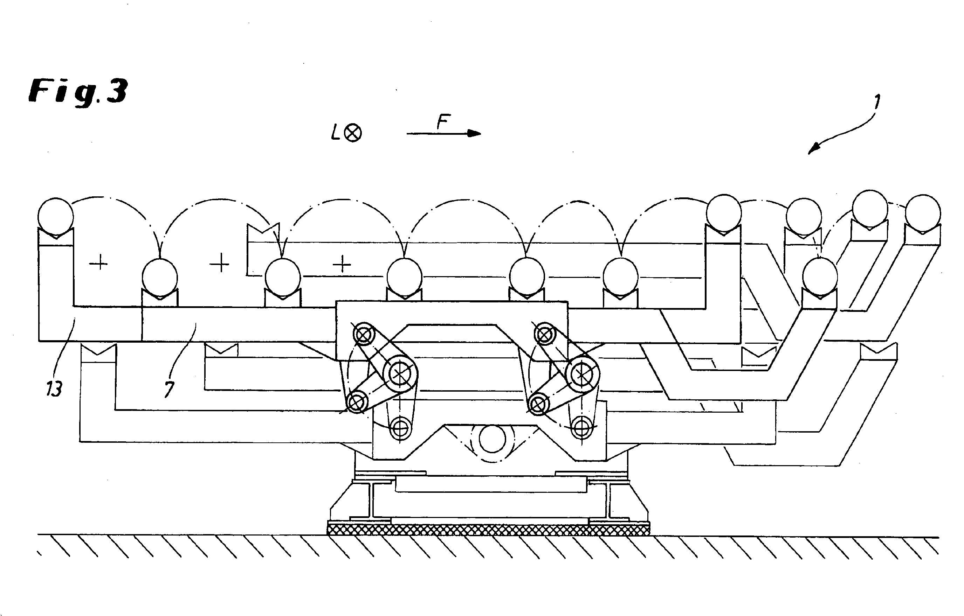

Fig. 3 zeigt eine vereinfachte Darstellung wie zuvor in Fig. 2 mit hier verschiedenen Zwischenpositionen der Rechen 7, 13 während eines getakteten Transporthubes.

### Bezugszeichenliste:

- 1: Transportvorrichtung
- 2: Werkstück
- 3: erster Ort
- 4: zweiter Ort
- 5: Ablageträger
- 6: Ablageträger
- 7: erster Förderrechen
- 8: Auflagefläche
- 9: Antriebswelle
- 10: Antriebswelle
- 11: erste Schwinge
- 12: erste Schwinge
- 13: zweiter Förderrechen
- 14: Auflagefläche
- 15: zweite Schwinge
- 16: zweite Schwinge
- 17: Antriebsmotor
- 18: Spannvorrichtung
- 19: Fräs- / Fasmaschine (Rohrfasanlage)
- 20: Gewindeschneidmaschine
- 21: Ausrichtpusher
- 22: Ausrichtrollgang

- L: Längsachse
- F: Förderrichtung
- α: Versatzwinkel

## Patentansprüche

1. Transportvorrichtung (1) für eine Längsachse (L) aufweisende Werkstücke (2), insbesondere für Rohre oder für Rundmaterial, mit der die Werkstücke (2) in eine Förderrichtung (F) quer zu ihrer Längsachse (L) von einem ersten Ort (3) zu einem zweiten Ort (4) gefördert werden können, wobei die Transportvorrichtung (1) aufweist:
mindestens zwei in Förderrichtung (F) beabstandet angeordnete ortsfeste Ablageträger (5, 6) für die Zwischenlagerung der zu fördernden Werkstücke (2),
mindestens einen ersten Förderrechen (7) mit einer Anzahl in Förderrichtung (F) beabstandeter Auflageflächen (8) für die Werkstücke (2),
mindestens zwei parallel zueinander angeordnete und synchron angetriebene Antriebswellen (9, 10) und
mindestens zwei erste Schwingen (11, 12), wobei jede erste Schwinge (11, 12) drehfest mit einer Antriebswelle (9, 10) und gelenkig mit dem ersten Förderrechen (7) verbunden ist,
**gekennzeichnet durch**
mindestens einen zweiten Förderrechen (13) mit mindestens einer Auflagefläche (14) für die Werkstücke (2), wobei der zweite Förderrechen (13) über mindestens zwei zweite Schwingen (15, 16) mit den Antriebswellen (9, 10) verbunden ist, wobei jede zweite Schwinge (15, 16) drehfest mit einer Antriebswelle (9, 10) und gelenkig mit dem zweiten Förderrechen (13) verbunden ist und wobei die zweiten Schwingen (15, 16) auf der jeweiligen Antriebswelle (9, 10) relativ zu den ersten Schwingen (11, 12) in Umfangsrichtung um einen Versatzwinkel (α) angeordnet sind.

2. Transportvorrichtung nach Anspruch 1, **dadurch gekennzeichnet, dass** der Versatzwinkel (α) zwischen 40° und 80° beträgt.

3. Transportvorrichtung nach Anspruch 2, **dadurch gekennzeichnet, dass** der Versatzwinkel (α) 60° beträgt.

4. Transportvorrichtung nach einem der Ansprüche 1 bis 3, **dadurch gekennzeichnet, dass** die beiden Antriebswellen (9, 10) von einem gemeinsamen Antriebsmotor (17) angetrieben sind.

5. Transportvorrichtung nach Anspruch 4, **dadurch gekennzeichnet, dass** die beiden Antriebswellen (9, 10) vom Antriebsmotor (17) im Bereich der axialen Mitte angetrieben werden, wobei die ersten und zweiten Schwingen (11, 12, 15, 16) in den axialen Endbereichen der Antriebswellen (9, 10) drehfest angeordnet sind.

6. Transportvorrichtung nach einem der Ansprüche 1 bis 5, **dadurch gekennzeichnet, dass** die Ablageträger (5, 6) auf zwei unterschiedlichen Höhenniveaus angeordnet sind.

7. Transportvorrichtung nach einem der Ansprüche 1 bis 6, **dadurch gekennzeichnet, dass** die Anzahl der Auflageflächen (8) für die Werkstücke (2) des ersten Förderrechens (7) größer ist als die Anzahl der Auflageflächen (14) für die Werkstücke (2) des zweiten Förderrechens (13).

8. Transportvorrichtung nach einem der Ansprüche 1 bis 7, **dadurch gekennzeichnet, dass** am ersten Ort (3) und/oder am zweiten Ort (4) eine Gewindeschneidmaschine zur Einbringung eines Gewindes in die Werkstücke (2) angeordnet ist.

9. Transportvorrichtung nach einem der Ansprüche 1 bis 7, **dadurch gekennzeichnet, dass** am ersten Ort (3) und/oder am zweiten Ort (4) eine Maschine zum Anfasen oder Anfräsen der Werkstücke (2) angeordnet ist.

10. Transportvorrichtung nach einem der Ansprüche 1 bis 9, **dadurch gekennzeichnet, dass** am ersten Ort (3) und/oder am zweiten Ort (4) eine Spannvorrichtung (18) zum Spannen eines Werkstücks (2) angeordnet ist.

## Claims

1. A transport device (1) for workpieces (2) having a longitudinal axis (L), particularly for pipes or round stock, by means of which the workpieces (2) can be conveyed from a first location (3) to a second location (4) in a conveying direction (F) transverse to their longitudinal axis (L), wherein the transport device (1) features:
at least two stationarily arranged storage carriers (5, 6) that are spaced apart in the conveying direction (F) and serve for the intermediate storage of the workpieces (2) to be conveyed,
at least one first rake conveyor (7) with a number of supporting surfaces (8) for the workpieces (2) that are spaced apart in the conveying direction (F),
at least two drive shafts (9, 10) that are arranged parallel to one another and synchronously driven, and
at least two first rocker arms (11, 12), wherein each first rocker arm (11, 12) is connected to a drive shaft (9, 10) in a torque-proof fashion and connected to the first rake conveyor (7) in an articulated fashion,
**characterized by**
at least one second rake conveyor (13) with at least one supporting surface (14) for the workpieces (2), wherein the second rake conveyor (13) is connected to the drive shafts (9, 10) by means of at least two second rocker arms (15, 16), wherein each second rocker arm (15, 16) is connected to a drive shaft (9, 10) in a torque-proof fashion and connected to the second rake conveyor (13) in an articulated fashion, and wherein the second rocker arms (15, 16) are arranged on the respective drive shaft (9, 10) circumferentially offset relative to the first rocker arms (11, 12) by an angle (α).

2. The transport device according to claim 1, **characterized in that** the offset angle (α) lies between 40° and 80°.

3. The transport device according to claim 2, **characterized in that** the offset angle (α) is 60°.

4. The transport device according to one of claims 1 to 3, **characterized in that** the two drive shafts (9, 10) are driven by a common driving motor (17).

5. The transport device according to claim 4, **characterized in that** the two drive shafts (9, 10) are driven by the driving motor (17) in the region of the axial center, wherein the first and second rocker arms (11, 12, 15, 16) are arranged in the axial end regions of the drive shafts (9, 10) in a torque-proof fashion.

6. The transport device according to one of claims 1 to 5, **characterized in that** the storage carriers (5, 6) are arranged at two different height levels.

7. The transport device according to one of claims 1 to 6, **characterized in that** the number of supporting surfaces (8) for workpieces (2) on the first rake conveyor (7) is greater than the number of supporting surfaces (14) for workpieces (2) on the second rake conveyor (13).

8. The transport device according to one of claims 1 to 7, **characterized in that** a thread cutting machine for cutting a thread into the workpieces (2) is arranged at the first location (3) and/or at the second location (4).

9. The transport device according to one of claims 1 to 7, **characterized in that** a machine for chamfering or spot-facing the workpieces (2) is arranged at the first location (3) and/or at the second location (4).

10. The transport device according to one of claims 1 to 9, **characterized in that** a fixing device (18) for fixing a workpiece (2) is arranged at the first location (3) and/or at the second location (4).

## Revendications

1. Dispositif de transport (1) pour des pièces à usiner (2) présentant un axe longitudinal (L), en particulier pour des tuyaux ou du matériel rond, avec lequel les pièces à usiner (2) peuvent être transportées d'un premier lieu (3) à un deuxième lieu (4) dans un sens de transport (F) transversalement à leur axe longitudinal (L), sachant que le dispositif de transport (1) présente :
au moins deux supports de dépôt (5, 6) fixes disposés espacés dans le sens de transport (F) pour le stockage intermédiaire des pièces à usiner (2) à transporter,
au moins un premier râteau de transport (7) comprenant un nombre de surfaces de pose (8) pour les pièces à usiner (2) espacées dans le sens de transport (F),
au moins deux arbres d'entraînement (9, 10) disposés parallèles entre eux et entraînés de façon synchrone, et
au moins deux premières manivelles oscillantes (11, 12), sachant que chaque première manivelle oscillante (11, 12) est reliée fixe en rotation à un arbre d'entraînement (9, 10) et de manière articulée au premier râteau de transport (7),
**caractérisé par**
au moins un second râteau de transport (13) comprenant au moins une surface de pose (14) pour les pièces à usiner (2), sachant que le second râteau de transport (13) est relié par au moins deux secondes manivelles oscillantes (15, 16) aux arbres d'entraînement (9, 10), sachant que chaque seconde manivelle oscillante (15, 16) est reliée fixe en rotation à un arbre d'entraînement (9, 10) et de manière articulée au second râteau de transport (13) et sachant que les secondes manivelles oscillantes (15, 16) sont disposées sur l'arbre d'entraînement (9, 10) respectif d'un angle de décalage (α) dans le sens périphérique, par rapport aux premières manivelles oscillantes (11, 12).

2. Dispositif de transport selon la revendication 1, **caractérisé en ce que** l'angle de décalage (α) est situé entre 40° et 80°.

3. Dispositif de transport selon la revendication 2, **caractérisé en ce que** l'angle de décalage (α) est de 60°.

4. Dispositif de transport selon l'une des revendications 1 à 3, **caractérisé en ce que** les deux arbres d'entraînement (9, 10) sont entraînés par un moteur d'entraînement (17) commun.

5. Dispositif de transport selon la revendication 4, **caractérisé en ce que** les deux arbres d'entraînement (9, 10) sont entraînés par le moteur d'entraînement (17) au niveau du centre axial, sachant que les premières et secondes manivelles oscillantes (11, 12, 15, 16) sont disposées fixes en rotation dans les extrémités axiales des arbres d'entraînement (9, 10).

6. Dispositif de transport selon l'une des revendications 1 à 5, **caractérisé en ce que** les supports de dépôt (5, 6) sont disposés sur deux niveaux de hauteur différents.

7. Dispositif de transport selon l'une des revendications 1 à 6, **caractérisé en ce que** le nombre de surfaces de pose (8) pour les pièces à usiner (2) du premier râteau de transport (7) est supérieur au nombre de surfaces de pose (14) pour les pièces à usiner (2) du second râteau de transport (13).

8. Dispositif de transport selon l'une des revendications 1 à 7, **caractérisé en ce qu'**une taraudeuse pour fabriquer un filet dans les pièces à usiner (2) est disposée sur le premier lieu (3) et/ou le second lieu (4).

9. Dispositif de transport selon l'une des revendications 1 à 7, **caractérisé en ce qu'**une machine pour rogner ou fraiser les pièces à usiner (2) est disposée sur le premier lieu (3) et/ou le second lieu (4).

10. Dispositif de transport selon l'une des revendications 1 à 9, **caractérisé en ce qu'**un dispositif de serrage (18) pour serrer une pièce à usiner (2) est disposé sur le premier lieu (3) et/ou le second lieu (4).
